# EUROPEAN PATENT SPECIFICATION

(11) **EP 2 043 856 B1**
(45) Date of publication and mention of the grant of the patent: **11.01.2012**
(21) Application number: 07810750.5
(22) Date of filing: 24.07.2007
(51) Int. Cl.: B32B 1/08, F16L 11/08

(54) **METHOD OF MANUFACTURE OF A HIGH PRESSURE BARRIER HOSE**
HERSTELLUNGSVERFRAHREN EINES HOCHDRUCKSPERRSCHLAUCHS
PROCEDE DE FABRICATION D'UN TUYAU DE PROTECTION HAUTE PRESSION

(30) Priority: 24.07.2006 US 832855 P
(43) Date of publication of application: 08.04.2009
(73) Proprietor: E.I. DU PONT DE NEMOURS AND COMPANY, Wilmington, DE 19898 (US)
(72) Inventor: DOSHI, Shailesh, Ratilal, Kingston, Ontario K7P 1S5 (CA); SIMONATO, Enrico, I-10146 Torino (IT); UNAN, Glenn, Anthony, Kingston, Ontario K7P 1S6 (CA)
(74) Representative: Dannenberger, Oliver Andre
(86) International application number: PCT/US2007/016686
(87) International publication number: WO 2008/013829

(56) References cited:
- EP-A- 0 101 092
- EP-A1- 1 010 929
- EP-A1- 1 306 203
- WO-A-01/23794

## Description

### FIELD OF THE INVENTION

The present invention relates to the manufacture of flexible hoses capable of handling high pressure fluids and providing high barrier against permeation loss

### BACKGROUND OF THE INVENTION

Many systems require the transport of fluids under high pressure. Examples of these are air conditioning and refrigeration systems where the refrigerant needs to be transported through and/or among various components of the system such as the compressor, condenser and evaporator. Hydraulic systems require transport of the hydraulic fluid from a pump to an actuator.

Hoses used for these and similar purposes need to be flexible for ease of installation and use, and often must be shaped into curves and bends for connecting components already installed into fixed positions. They must also be able to contain the fluid pressure. These hoses are often made of elastomeric materials such as natural or synthetic rubber or thermoplastic elastomers, and are typically reinforced with braiding to impart high pressure capability.

An additional requirement especially in air-conditioning, refrigeration and fuel transport applications is high barrier to permeation of the contained fluid through the wall of the hose construction. It is desired that the hose wall also provides high barrier to ingression of external fluids, such as air or moisture, into the contained fluid.

In order to meet barrier requirements, hoses are often provided with a suitable thermoplastic barrier layer on the inside. A typical high pressure barrier hose may thus consist of multiple layers - an inner thermoplastic barrier layer made of a polyamide, a polyester or a suitable thermoplastic material; an overlayer of an elastomeric material to provide flexibility; and a braid layer over the elastomeric layer to provide pressure capability and an outer protective cover layer of an elastomeric material.

While such hoses provide pressure capability and flexibility, their barrier properties are limited. With the drive for reduced emissions, this becomes an issue in highly demanding applications such as refrigeration and air conditioning. As systems with new non-halogen based refrigerants are being developed such as those based on CO2 and hydrocarbons, barrier requirements become significantly more stringent. Conventional hoses are inadequate in such applications.

Attempts to make flexible high pressure high barrier hoses often involve first making a corrugated metallic tube and coating the tube with an elastomeric polymer. Such constructions, however, require complex manufacturing processes, and are expensive for large scale uses. US patent 7,055,553 describes a fluid transfer hose incorporating a metal barrier layer. The metal barrier layer is bonded using techniques that require use of aggressive chemicals. Also, expensive fluoropolymer layers are incorporated in the hose construction.

Document EP 1010929 shows also relevent prior art.

It is an object of the present invention to provide a flexible hose that offers superior barrier properties. A feature of the invention is its simple and straightforward construction, as described by the method of assembly and example provided herein. It is an advantage of the present invention to provide hoses and hosing materials that are suitable for the various applications enumerated herein. These and other objects, features and advantages of the present invention will become better understood upon having reference to the description of the invention herein.

### SUMMARY OF THE INVENTION

There is disclosed and claimed herein a method of manufacture of a hose including a series of layers arranged from the innermost to the outermost suface, as described in claim 1.

### IN THE DRAWING

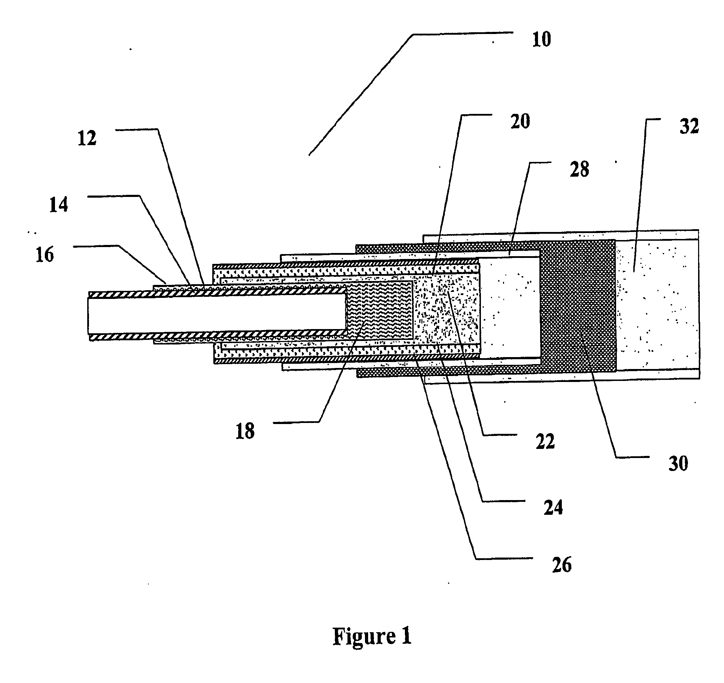

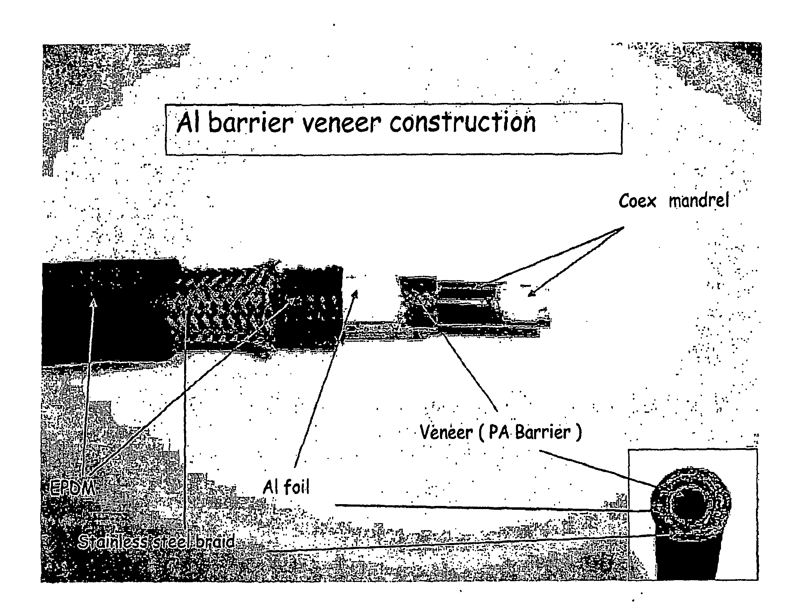

FIGURE 1 is a cross sectional view of a tube of the instant invention.

### DETAILED DESCRIPTION OF THE INVENTION

The present invention offers hoses constructed in multiple layers such as described below from the innermost to the outermost surface:
- an layer of a thermoplastic veneer;
- a tie layer;
- a metal-polymer laminate consisting of a layer of polymer compatible with the tie layer, a thin layer of metallic foil, and another layer of a polymer protecting the metallic foil;
- a braid under-layer of a thermoplastic or thermosetting elastomer;
- a braid layer providing reinforcement; and
- an outer layer of an elastomeric material.

Having reference to Figure 1, there is shown generally at 10 each of the layers of the invention, numbered and described from the innermost layer to the outermost layer. Hence, there is first depicted closest to the core (where the mandrel is inserted and then later withdrawn) an innermost layer of a thermoplastic veneer 12 having an inner surface 14 and an outer surface 16. The veneer may incorporate a tie layer 18 positioned at its outer surface 16. A metal-polymer laminate 20 is positioned over the tie layer and consisting of a layer 22 of polymer compatible with or bondable to the outer surface of the veneer, a thin layer 24 of metallic foil, and another layer 26 of a polymer protecting the metallic foil. Thereafter, a braid under-layer 28 is positioned over the metal-polymer laminate 20 and consisting of an elastomeric material. A reinforcing braid layer 30 is then positioned over the braid under-layer 28. Finally, an outer layer 32 of an elastomeric material positioned over the reinforcing braid layer 30.

The hose is manufactured in multiple steps, sequenced as provided below.
Step 1 - First a mandrel or a solid rod or other suitable structure is provided that serves as a support through the subsequent manufacturing steps. Such mandrels are commonly used in the manufacture of hoses made out of thermosetting materials that need to be supported during the extrusion and curing steps. They are made of a variety of thermoplastic or thermosetting materials such as copolyester ethers, copolyamides, polyolefins, TPVs, EPDMs, synthetic rubbers etc. It is desireable to ensure that the mandrel has sufficient flexibility to be spoolable in long lengths.
Step 2 - A thermoplastic veneer is extruded over the mandrel. The veneer can be in the form of a monolayer or a two layer tube depending on the type of metal foil and polymer laminate to be used in step 3 as explained below. It should not develop adhesion to the mandrel surface so that mandrel can be extracted at the end of hose fabrication. As appropriate, one of skill in the field can apply suitable release agents to the mandrel to facilitate the nonadhesive properties of the mandrel in relation to the inner layer of the veneer and lubricate its extraction at the end of hose fabrication.

A monolayer veneer or the inner layer of the two-layer veneer can be made of a polyamide, copolyamide, polyphthalamide, polyester or copolyester that provides chemical and thermal resistance to the contained fluid it is in contact with.

When a monolayer veneer is used, the laminate used in step 3 is provided with an adhesive that can bond to the surface of the veneer. Examples of such laminates are those where metallic foil is laminated with a pressure sensitive adhesive (PSA) that can adhere to the surface of the veneer. Such laminates are available commercially with variety of adhesives such as acrylics, rubber, silicones etc.

In a two-layer veneer construction, the outer layer is made of a functionalized polymer to function as a tie layer between the inner thermoplastic veneer and the metal-polymer laminate to be provided over it. It can be made of a functionalized polyolefin or copolyolefin such as those made by grafting or copolymerizing functional monomers with olefins and copolyolefins. Some examples of functional monomers include those with acid, anhydride, acrylate, epoxy functionality.

When a two-layer veneer is used, the laminate used in step 3 does not need to have an adhesive surface. It is rather sufficient to have a polymeric layer at the surface that is compatible or otherwise bondable to the functionalized tie layer of the veneer.
Step 3 - A metal foil and polymer laminate consisting of a first polymer layer compatible or bondable to the surface of the veneer, a thin metallic foil and a second polymer layer (which may be identical to or different from the first polymer layer) is then applied over the assembly prepared in step 2.

Adhesion can be further promoted by application of heat and/or pressure as warranted. Heating may not be necessary if the first polymer layer of the laminate is a room temperature pressure sensitive adhesive (PSA)type. When a two-layer veneer is used along with a functionalized polyolefin as the tie layer, application of both heat and pressure are needed. In one embodiment, the assembly of Step 2 is covered by the metal foil laminate and passed through a heated die designed to apply pressure on to the assembly to form the bonding. In another embodiment, the veneer supported by the mandrel is first passed through a heating tunnel so as to raise the surface temperature of the veneer. The metal foil laminate is then applied over the veneer, and the assembly is passed through another heated die designed to apply pressure and affect bonding.

The laminate is applied over the veneer lengthwise so that it circumferentially wraps around it. The two edges of the foil positioned lengthwise along the tube are bonded tightly together and any excess foil is then trimmed to provide a fully covered assembly. This form of wrapping is preferred over the so-called helical wrap formed by winding a tape over the veneer in a helical fashion at an angle to the axis of the hose because it results in only one seam running along the length of the hose. From barrier perspective, a seam can provide potential site for permeation leak. Hence, it is desirable to minimize it's occurrence in the construction. Lengthwise wrap described above is also easier to apply especially on a small diameter tubing such as that encountered in flexible high pressure hoses.

In cases where extremely high barrier is desired, it may be advantageous to provide multiple layers of the laminate in a manner that seams do not overlap thus providing higher level of permeation barrier.

Metallic foil is thin enough to provide flexibility while resist fracture during handling. For example, it can be aluminum foil, in 1-10 micron thickness range to provide very high level of barrier while retaining flexibility. Note that this approach provides a continuous layer of metal over the tube surface unlike vapor deposition techniques which leave gaps in metal coverage resulting in inferior barrier properties.

The second layer of polymer over the metallic foil is selected to protect the surface of the metal foil and provide compatibility with the braid under-layer to be provided over it. It can be a polyamide, polyester or a polyolefin, and is selected so as to be compatible with the type of braid underlayer to be used in the next step.
Step 4 - A braid underlayer is extruded over the assembly of Step 3. The underlayer is an elastomeric material such as a natural or synthetic rubber or a thermoplastic elastomer such as thermoplastic olefin (TPO), thermoplastic ester elastomer (TEE) or a thermoplastic vulcanizate (such as ETPV or TPV, common selections in this field). Its purpose is to provide cushioning and protection against forces imposed during braiding.

It is preferable if this braid underlayer bonds to the surface of the laminate applied in step 3. This may be accomplished by several means such as ensuring that the braide underlayer material is compatible with the surface layer of the laminate, extruding a two-layer braid underlayer such that its inner layer acts as a tie layer to bond to the surface of the laminate or sequentially extruding a tie layer over the laminate first and then the braid underlayer.

A functionalized polymer such as that used for forming the tie layer of the two-layer veneer of step 2 may be used for this purpose, the functionalization chosen to be compatible with the two layers to be bonded.
Step 5 - A braided reinforcement layer is provided over the assembly of Step 4. Depending on the desired pressure capability, braiding can be made of metallic or polymeric filaments or high performance filaments such as Kevtar® or Nomex®, both commercially available from E.I. DuPont de Nemours & Co Inc. of Wilmington, Delaware. Braid density is determined according to desired pressure capability and filament material selection. Multiple layers of braid and hybrid braids of multiple types of filaments are often used in practice to maximize the degree of reinforcement while optimizing the cost.
Step 6 - An outer protective layer is extruded over the braided reinforcement layer. This layer can again be made of an elastomeric material such as TPO, TEE or a thermoplastic vulcanizate (ETPV or TPV).
Step 7 - If any of the layers in the hose construction are made of a thermosetting material, then the assembly of Step 6 needs to cured. If all the layers are made of thermoplastic materials, then curing is not necessary. Note that one or more outer protective layers can be added at this time as well.
Step 8 - Finally, the mandrel is extracted from the assembly of Step 6 or Step 7 to produce the finished hose. The mandrel can be extracted by applying hydraulic pressure to one end of the hose or by mechanical means.

Hose made this way can be cut to desired length and fittings can be applied as desired. The hose made this way provides flexibility, high pressure capability and very high barrier capability.

It is readily apparent to those having skill in the art to which this invention pertains that in addition to the materials mentioned herein, a variety of other materials are suitable for each layer as is well known and understood. Likewise, representative thicknesses of each layer and techniques for braiding are already well appreciated by those having skill in the field, and are selected according to the intended application.

### Example

A hose was constructed according to this invention in the following manner. A mandrel was first made in the form of a solid rod with a diameter of 6.4 morn. A veneer consisting of an inner layer of 0.65 mm thick Zytet® 42 (a high MWA 66 commercially available from E.I. DuPont de Nemours & Co., Inc.) and 0.1 mm thick outer tie layer of Bynel® 4206 (a maleic anhydride grafted polyethylene commercially available from E.I. DuPont de Nemours & Co., Inc.) was extruded over the mandrel. The assembly was then laminated with a metal-polymer laminate available as BFW 46 and obtained from James Dawson Enterprises Ltd of Lachine, Quebec, Canada. The laminate consisted of an inner layer of low density polyethylene, a tie layer of EEA, an aluminum foil(1 0 micron thick) and an outer layer of polyethylene terephthalate (PET) with a total thickness of 0.1 mm. Lamination was carried out using a heated die with a passage way of appropriate size to pass the assembly through. The assembly of the previous step was uncoiled from a spool and a strip of metal-polymer laminate was wrapped around it such that two long edges of the strip mat against each other. The assembly was passed through the die heated to 140 C to affect the bonding. Excess laminate edge was trimmed off carefully so as not to damage the seal and avoid exposing underlying layer. A layer of TPV was extruded over the assembly. Following that, a braid of PET filaments was applied, and outer protective layer of ETPV was extruded over the top. The mandrel was subsequently extracted to prepare the multi-layer hose.

## Claims

1. A method of manufacturing a tube exhibiting superior barrier resistance and flexibility, the method comprising:
(a) Providing a mandrel;
(b) Extruding over the mandrel a two-layer veneer including an inner thermoplastic vencer and a tie layer made of a functionalized polymer made of a functionalized polyolefin or copolyolefin; having an inner surface and an outer surface;
(c) Applying over said veneer a metal foil and polymer laminate consisting of a first polymer layer compatible with or bondable to said outer surface of said veneer, a thin metallic foil and a second polymer layer to provide an assembly; and passing the assembly through a heated die designed to apply pressure on to the assembly to form the bonding;
(d) Extruding over said metal foil and polymer laminate an elastomeric braid underlayer;
(e) Providing over said elastomeric braid underlayer a braided reinforcement layer,
(f) Extruding over said braided reinforcement layer an outer protective layer;
(g) If any of said layers are made of a thermosetting material, then the curing the assembly of step (f); and
(h) Extracting the assembly of either step (f) or step (g) from the mandrel

## Patentansprüche

1. Verfahren zur Herstellung eines Rohrs, das einen erhöhten Barnerewiderstand und eine höhere Flexibilität aufweist, das Verfahren umfassend:
(a) Bereitstellen eines Doms;
(b) Extrudieren, auf den Dorn, eines zweischichtigen Furniers, das ein inneres thermoplastisches Furnier und eine Haftvermittlerschicht einschließt, die aus einem aus einem funktionalisierten Polyolefin oder Copolyolefin hergestellten funktionalisierten Polymer hergestellt ist; das eine innere Oberfläche und eine äussere Oberfläche aufweist;
(c) Aufbringen, auf das Furnier, einer Metallfolie und eines Polymerlaminats, bestehend aus einer ersten Polymerschicht, die mit der äusseren Oberfläche des Furniers kompatibel ist oder sich an diese binden kann, einer dünnen Metallfolie und einer zweiten Polymerschicht, um eine Anordnung bereitzustellen; und Leiten der Anordnung durch eine erhitzte Düse, die gestaltet ist, um Druck auf die Anordnung auszuüben, um die Bindung zu bilden;
(d) Extrudieren, auf die Metallfolie und das Polymerlaminat, einer elastomeren Flecht-Unterschicht;
(e) Bereitstellen, auf der elastomeren Flecht-Unterschicht, einer geflochtenen Verstärkungsschicht;
(f) Extrudieren, auf die geflochtene Verstärkungsschicht, einer äusseren Schutzschicht;
(g) falls eine der Schichten aus einem thermohärtenden Material hergestellt ist, dann Härten der Anordnung nach Schritt (f); und
(h) Extrudieren der Anordnung von Schritt (f) oder Schritt (g) aus dem Dorn.

## Revendications

1. Procédé pour la fabrication d'un tube présentant une résistance barrière et une flexibilité supérieures, le procédé comprenant :
(a) la fourniture d'un mandrin;
(b) l'extrusion, sur le mandrin, d'un placage à deux couches, incluant un placage intérieur thermoplastique et une couche de liaison faite d'un polymère fonctionnalisé fait d'une polyoléfine ou copolyoléfine fonctionnalisée; ayant une surface interne et une surface externe;
(c) l'application, sur ledit placage, d'une feuille de métal et d'un laminé de polymère, consistant en une première couche de polymère compatible avec ou apte à être liée à ladite surface externe dudit placage, une feuille de métal mince et une deuxième couche de polymère pour fournir un assemblage; et le passage de l'assemblage à travers une matrice chauffée conçue pour appliquer une pression sur l'assemblage pour former la liaison;
(d) l'extrusion sur ladite feuille de métal et ledit laminé de polymère d'une sous-couche tressée élastomère;
(e) la fourniture, sur ladite sous-couche tressée élastomère, d'une couche de renforcement tressée;
(f) l'extrusion sur ladite couche de renforcement tressée d'une couche extérieure de protection;
(g) puis, si l'une quelconque desdites couches est faite d'un matériau thermodurcissable, le durcissement de l'assemblage de l'étape (f); et
(h) l'extraction de l'assemblage de l'étape (f) ou de l'étape (g) du mandrin.
